# EUROPEAN PATENT SPECIFICATION

(11) **EP 4 070 005 B1**
(45) Date of publication and mention of the grant of the patent: **31.01.2024**
(21) Application number: 20821435.3
(22) Date of filing: 07.12.2020
(51) Int. Cl.: F16L 37/092, F16L 37/12

(54) **ASSEMBLY AND METHOD FOR ASSEMBLING A PIPE WITH A PIPE COUPLING**
ANORDNUNG UND VERFAHREN ZUR MONTAGE EINES ROHRES MIT EINER ROHRKUPPLUNG
ENSEMBLE ET PROCÉDÉ D'ASSEMBLAGE D'UN TUYAU AVEC UN RACCORD DE TUYAU

(30) Priority: 06.12.2019 NL 2024398
(43) Date of publication of application: 12.10.2022
(73) Proprietor: Dyka B.V., 8331 LJ Steenwijk (NL)
(72) Inventor: ZUURMOND, Johannes, 8331 LJ STEENWIJK (NL); KOOISTRA, Barry, 8331 LJ STEENWIJK (NL); BERENPAS, Sebastiaan, 8331 LJ STEENWIJK (NL)
(74) Representative: Geurts, Franciscus Antonius
(86) International application number: PCT/NL2020/050763
(87) International publication number: WO 2021/112681

(56) References cited:
- EP-A1- 2 131 089
- EP-A1- 2 923 132
- AU-A1- 2004 214 589

## Description

### BACKGROUND OF THE INVENTION

The present invention relates to an assembly of a synthetic cylindrical pipe and a pipe coupling for connection to the synthetic pipe. The synthetic pipe for instance is a low-pressure water pipe, for instance for the drainage of sewage water.

### SUMMARY OF THE INVENTION

A drawback of the known assembly of a synthetic cylindrical pipe and a pipe coupling for connection to the synthetic pipe can be that it cannot be glued together on site to connect them to each other in a watertight fashion. This is for instance the case when the pipe is made of polyethylene (PE) or polypropylene (PP). Also when the pipe is made of a synthetic material that is capable of being glued together very well per se, such as polyvinyl chloride (PVC), it may not be advisable to glue the parts together for practical reasons or environmental technical reasons.

EP 2.131.089 discloses a tube coupling comprising a coupling body having an open ended throughway to receive a tube, a collet located in the open end of the throughway having a ring and a plurality of flexible arms extending generally axially of the ring into the throughway. The throughway has a tapered cam surface convergent towards said open end and the collet arms have heads at their distal ends for engaging both the cam surface and a tube extending through the collet into the throughway to be compressed against the tube by the cam surface with outward movement of the collet with respect to the throughway to secure the tube in the throughway. The tube coupling has a collet lock rotatably mounted on the coupling body having one rotary position in which the lock holds the collet in said outward tube securing position and another rotary position in which the collet can move axially with respect to the throughway for release and engagement of a tube by the collet.

It is an object of the present invention to provide an assembly of a synthetic cylindrical pipe and a pipe coupling for connection to the synthetic pipe that can be connected to each other on site in an environmentally friendly fashion.

It is an object of the present invention to provide an assembly of a synthetic cylindrical pipe and a pipe coupling for connection to the synthetic pipe that can be connected to each other on site without knowledge of materials of the synthetic pipe.

According to a first aspect, the invention provides an assembly of a synthetic cylindrical pipe and a pipe coupling for connection to the synthetic pipe, wherein the pipe coupling comprises an insertion part having an insertion opening for in an insertion direction inserting the synthetic pipe into the pipe coupling, wherein the insertion part comprises a synthetic casing that is provided with a circumferential insertion wall in which the pipe fits, wherein via a first diameter step the insertion wall merges into a first circumferential accommodation wall having a larger inside diameter than the insertion wall, wherein the first accommodation wall bounds a first rebate, wherein the insertion part comprises a grip ring that is accommodated in the first rebate and that engages around the inserted pipe, and a pinching ring extending at least partially around the grip ring, wherein the pinching ring is provided with an inner surface oriented towards the grip ring for wedge action onto the grip ring, wherein in the insertion direction the grip ring can be moved in the first rebate relative to the pinching ring between a first position, in which the pipe can be inserted through the grip ring towards the insertion wall, and a second position closer towards the insertion opening, in which the grip ring fixedly engages around and onto the inserted pipe, wherein during the movement from the first position into the second position the inner surface of the pinching ring urges the grip ring into fixed engagement onto the pipe due to the wedge action, wherein the insertion part comprises a circumferential seal within the casing which spaced apart from the grip ring engages around and onto the pipe with a pressure force, and a washer that engages onto the casing and that confines the grip ring in the first rebate via the pinching ring, wherein the washer can be rotated relative to the casing from a predetermined standby position into a predetermined fixed position and/or into a predetermined disassembling position, wherein in the standby position the grip ring in the second position engages fixedly around and onto the inserted pipe, in the fixed position relative to the standby position the pinching ring has been moved towards the grip ring and the wedge action of the pinching ring onto the grip ring has been increased and/or the pressure force of the seal on the pipe has been increased, and in the disassembling position the washer is or gets out of engagement with the casing.

The assembly according to the invention has a pipe coupling with an insertion part which in the insertion direction is provided with the circumferential seal in the confining wall and, behind it, the grip ring in the first rebate. When the pipe with the washer in the standby position is inserted into the insertion part, the seal connects to it immediately in a sealing fashion. The pipe subsequently passes through the grip ring which is in its first position. By retracting the pipe, the grip ring is taken along into its second position to fixedly engage around onto the inserted pipe. The pipe is fixated and the parts are connected to each other in a sealing fashion. This does not require glue, which is practical and environment-friendly. When the washer is rotated into the disassembling position, the washer can be removed to end the engagement by the grip ring. The pipe coupling can then be reused. When the washer is rotated into the fixed position, the engagement onto the pipe by the pinching ring and/or the seal is increased, as a result of which a rotation of the pipe relative to the pipe coupling can be fixated. In that way a pipe system having a predetermined three-dimensional configuration which is for instance incorporated in concrete, can be made on site.

In one embodiment, the grip ring is provided with a base ring and grip fingers projecting therefrom, which fingers are distributed around the base ring and extend from the base ring, parallel to the insertion direction. The base ring ensures that the grip fingers are positioned all around the inserted pipe.

In one embodiment, the grip fingers have a free outer end which is oriented from the base ring towards the insertion opening for shortly engaging onto the circumferential seal on the pipe.

In one embodiment, the grip fingers have a free outer end that is provided with a pilot edge oriented obliquely to the insertion direction, so that the inserted pipe moves through the grip fingers in a controlled fashion without colliding with them.

In one embodiment, the grip fingers are provided with one or more grip teeth for engagement onto the inserted pipe. This is particularly useful when the synthetic pipe has a smooth outer surface.

In one embodiment, the grip fingers are connected to the base ring via a living hinge or a local narrowing in the material, as a result of which the grip fingers are individually flexibly movable relative to the base ring.

In one embodiment, the grip ring and the pinching ring have parts that engage onto one another for limiting a rotation of the grip ring relative to the pinching ring. That way a rotation of the pipe relative to the pipe coupling can be counteracted.

In one embodiment thereof, the parts that engage onto one another limit the rotation of the grip ring relative to the pinching ring up to a predetermined stroke.

In one embodiment, the grip ring is provided with a base ring and grip fingers projecting therefrom, which fingers are distributed around the base ring and extend from the base ring, parallel to the insertion direction, wherein the pinching ring is provided with one or more cams that project inward from the inner surface and extend between consecutive grip fingers. The distance between the grip fingers then defines the angle at which readjustment is possible. This angle can optionally be adjusted stepwise by rotating the cams between two consecutive grip fingers.

In one embodiment, the grip ring is manufactured of a synthetic material.

In one embodiment, the grip ring is manufactured of a synthetic material that is harder than the synthetic material of which the pipe has been manufactured, so that it is capable of pressing itself locally into the pipe in order to fixedly engage onto it.

In one embodiment thereof, the synthetic material is mixed with glass parts, which ensure hardness of the material.

In an alternative embodiment, the higher hardness of the grip ring relative to the pipe is obtained due to the grip ring being manufactured of metal.

In one embodiment, the first accommodation wall has a constant inside diameter parallel to the insertion direction.

In one embodiment, the first accommodation wall of the insertion part merges via a second diameter step into a second accommodation wall having a larger inside diameter than the first accommodation wall, wherein the second accommodation wall bounds a second rebate in which the pinching ring is accommodated. The second diameter step bounds the second rebate in the direction of the grip ring, as a result of which the position of the pinching ring relative to the grip ring positioned in there is predetermined.

In one embodiment thereof, the second accommodation wall has a constant inside diameter parallel to the insertion direction.

In one embodiment, the inner surface of the pinching ring is obliquely oriented to the insertion direction, as a result of which the wedge action can be obtained by means of surface contact with the grip ring.

In one embodiment, the pinching ring is manufactured of a synthetic material.

In one embodiment, the seal is flexible, so that it is capable of properly sealing against the pipe and the casing. Furthermore, the engagement by the seal onto the pipe can then be increased by compressing it transversely thereto when rotating the washer into the fixed position if applicable.

In one embodiment, the seal is provided with a base ring which engages onto the casing in a sealing fashion, and a circumferential flexible flap projecting from the base ring for sealing engagement onto the pipe. The base ring is capable of keeping the seal in its position in the casing, wherein the flexible flap extends towards the pipe in order to seal onto it.

In one embodiment, the pinching ring and the seal are connected to one another or form one unity in order for them to keep each other correctly positioned relative to the casing.

In one embodiment thereof, the pinching ring and the seal form an insert piece placed in the casing as a unity. This unity then forms one insert piece for the casing.

In one embodiment thereof, the unity is manufactured via two-component injection molding, so that the most suitable materials can be used for both the pinching ring and the seal.

In one embodiment, the seal is manufactured of a flexible material.

In one embodiment, the seal, the pinching ring and the grip ring are in series with one another in the insertion direction, so that a pressure force exerted by the washer can be passed on to the seal and to the pinching ring that is active on the grip ring.

In one embodiment, in the disassembling position counter the insertion direction, the washer is positioned at a larger distance from the grip ring than it is in the standby position.

In one embodiment, in the fixed position in the insertion direction, the washer is positioned at a shorter distance from the grip ring than it is in the standby position.

In one embodiment, in the standby position, in the fixed position and in the positions in between them, the washer is in engagement with the casing.

In one embodiment, the insertion part and the washer are provided with attachment cams that are distributed around the casing and that extend in guide grooves, wherein the guide grooves have a tensioning track with a tangential directional component in the rotary direction and a smaller axial directional component parallel to the insertion direction. The attachment cams can remain confined in the guide grooves so that the pipe coupling forms one pre-assembled unity with the washer in the standby position.

In one embodiment, at least one of the guide grooves is provided with a first snap cam for cooperation with the attachment cam, wherein the attachment cam is able to pass by the first snap cam while the material of the first snap cam and/or the attachment cam deforms, wherein the first snap cam and the attachment cam define the predetermined standby position. Passing by is clearly noticeable, so that reaching or moving out of the standby position can be perceived in a properly noticeable fashion and the washer can be parked in the standby position.

In one embodiment, at least one of the guide grooves is provided with a second snap cam for cooperation with the attachment cam, wherein the attachment cam is able to pass by the second snap cam due to deformation of the material of the second snap cam and/or the attachment cam, wherein the second snap cam and the attachment cam define the predetermined fixed position. Passing by is clearly noticeable, so that reaching or moving out of the fixed position can be perceived in a properly noticeable fashion and the washer can be parked in this fixed position.

In one embodiment, the washer is provided with a circumferential wall extending around the casing, wherein the circumferential wall merges into a confining wall oriented towards the pipe for confining the grip ring in the first rebate. The washer can then easily be handled at the circumferential wall for switching from the standby position into the disassembling position or fixed position.

In a practical embodiment, the attachment cams project from an exterior side of the casing and the guide grooves are situated in the washer.

In one embodiment, the washer is provided with pilot surfaces situated along the guide grooves and positioned obliquely to the insertion direction for receiving the attachment cams, wherein the pilot surfaces merge into thresholds towards the guide grooves. The pilot surfaces may assist in allowing the attachment cams to pass over the thresholds into the guide grooves when the washer is placed around the casing, wherein the thresholds prevent the attachment cams from moving out of the guide grooves again.

In a combined embodiment, the circumferential wall has a free end edge and the guide grooves terminate in the free end edge.

In one embodiment, in the rotary direction, the guide grooves terminate in the free end edge, spaced apart from the pilot surfaces.

In one embodiment, the washer is manufactured of a synthetic material.

According to a second aspect, the invention provides a method for assembling a pipe coupling for connection to a synthetic pipe, wherein the pipe coupling comprises an insertion part having an insertion opening for in an insertion direction inserting the synthetic pipe into the pipe coupling, wherein the insertion part comprises a synthetic casing that is provided with a circumferential insertion wall in which the pipe fits, wherein via a first diameter step the insertion wall merges into a first circumferential accommodation wall having a larger inside diameter than the insertion wall, wherein the first accommodation wall bounds a first rebate, wherein the insertion part comprises a grip ring that is accommodated in the first rebate and that engages around the inserted pipe, a pinching ring extending at least partially around the grip ring for wedge action onto the grip ring, a circumferential seal within the casing which, spaced apart from the grip ring, engages around and onto the pipe with a pressure force, and a washer that engages onto the casing and that confines the grip ring in the first rebate via the pinching ring, wherein the washer can be rotated relative to the casing from a predetermined standby position into a predetermined disassembling position, wherein in the standby position the grip ring engages fixedly around and onto the inserted pipe, and in the disassembling position the washer is or gets out of engagement with the casing, wherein the washer is provided with a circumferential wall having a free end edge that extends around the casing and that merges into a confining wall oriented towards the pipe for confining the grip ring in the first rebate, wherein the insertion part is provided with attachment cams that are distributed around the casing, and the washer is provided with guide grooves in the circumferential wall in which grooves the attachment cams extend, wherein the guide grooves have a tensioning track with a tangential directional component in the rotary direction and a smaller axial directional component parallel to the insertion direction, wherein the washer is provided with pilot surfaces situated along the guide grooves and positioned obliquely to the insertion direction for receiving the attachment cams, wherein the pilot surfaces merge into thresholds towards the guide grooves, wherein the method comprises the placing of the grip ring, the pinching ring and the seal in the casing or in the washer, moving the casing and the washer towards each other in the insertion direction with the pilot surfaces being aligned with the attachment cams, and via the pilot surfaces guiding the attachment cams past the thresholds into the guide grooves, wherein the washer arrives in the standby position.

In one embodiment thereof, the guide grooves terminate in the free end edge, spaced apart from the pilot surfaces.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of the exemplary embodiments shown in the attached drawings, in which:
Figures 1A, 1B and 1C show an isometric view of a coupling sleeve for pipes according to an embodiment of the invention, and two partially exploded isometric views thereof;
Figures 2A and 2B show an isometric longitudinal section and a straight view of a detail thereof of the coupling sleeve according to figures 1A - 1C;
Figures 3A and 3B show an isometric longitudinal section and a straight view of a detail thereof of the coupling sleeve according to the previous figures once a pipe has been inserted therein and secured in a first coupling position.
Figures 4A and 4B show an isometric longitudinal section and a straight view of a detail thereof of the coupling sleeve according to figures 3A and 3B once a pipe has been secured therein in a second coupling position.

### DETAILED DESCRIPTION OF THE DRAWINGS

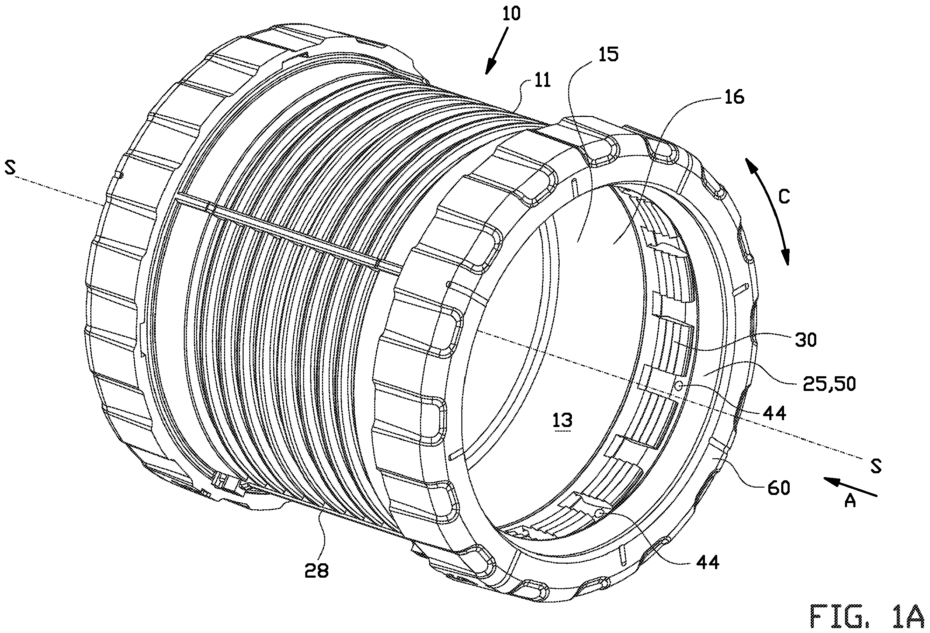

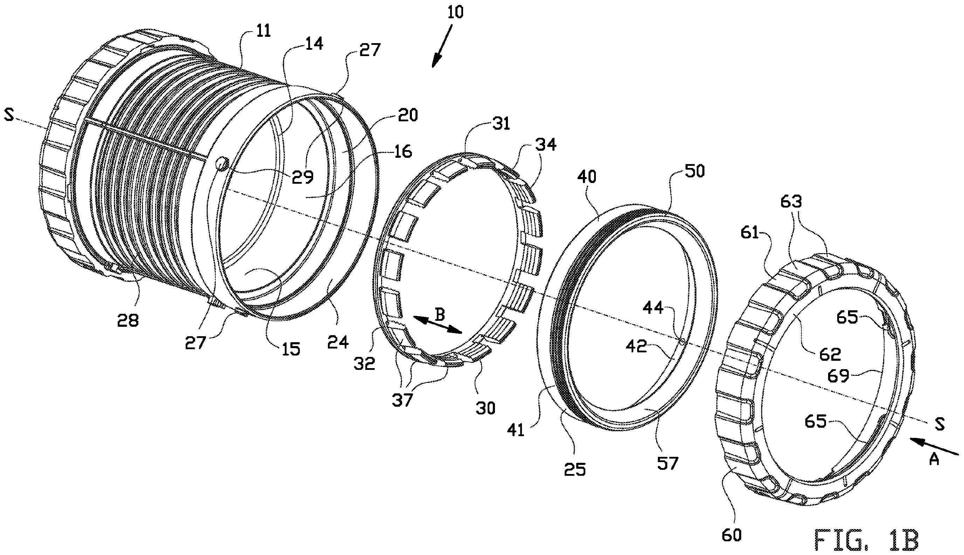

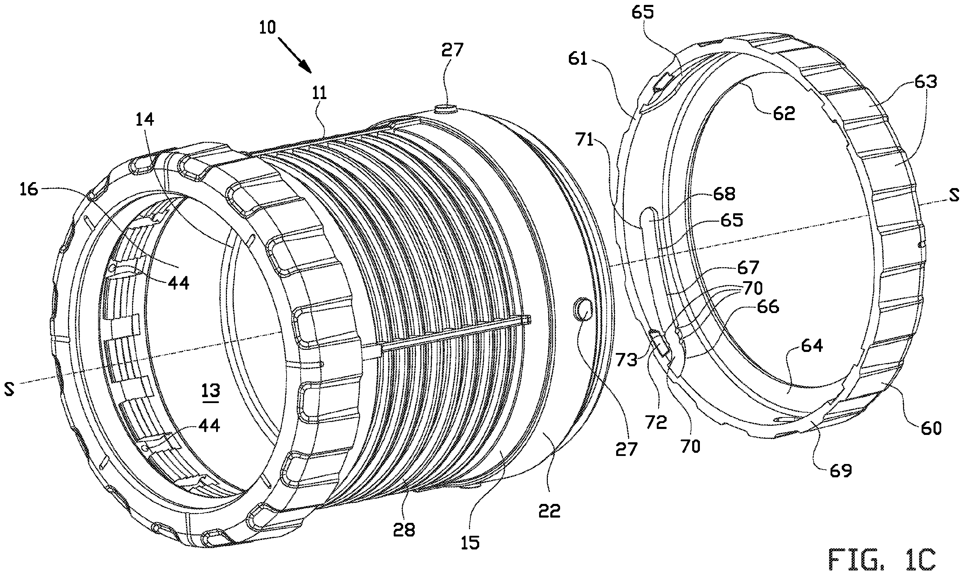

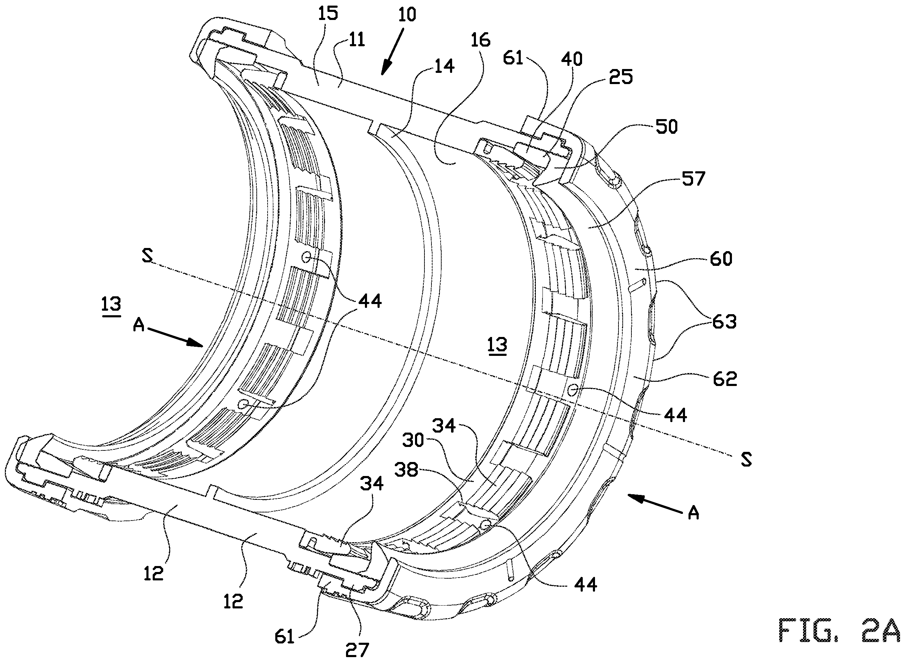

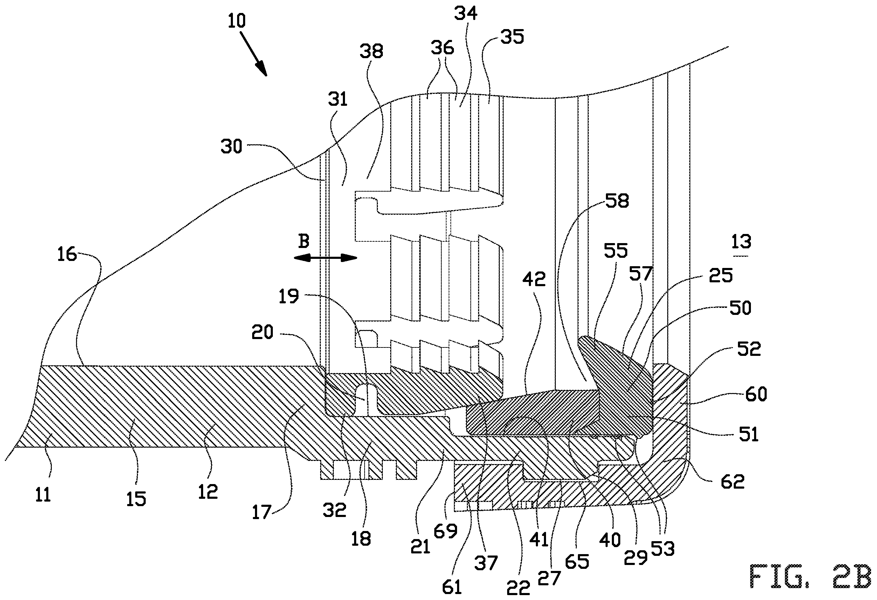

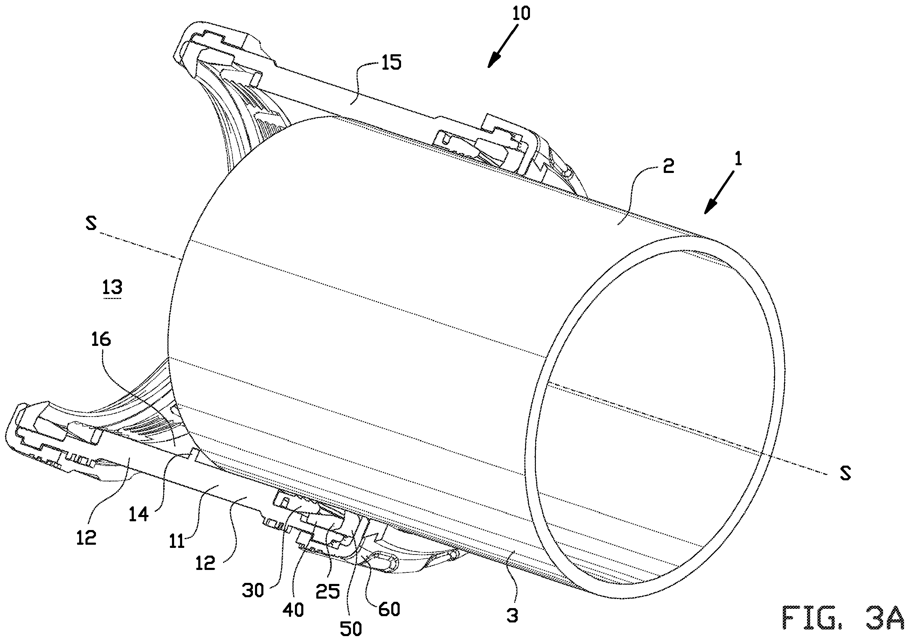

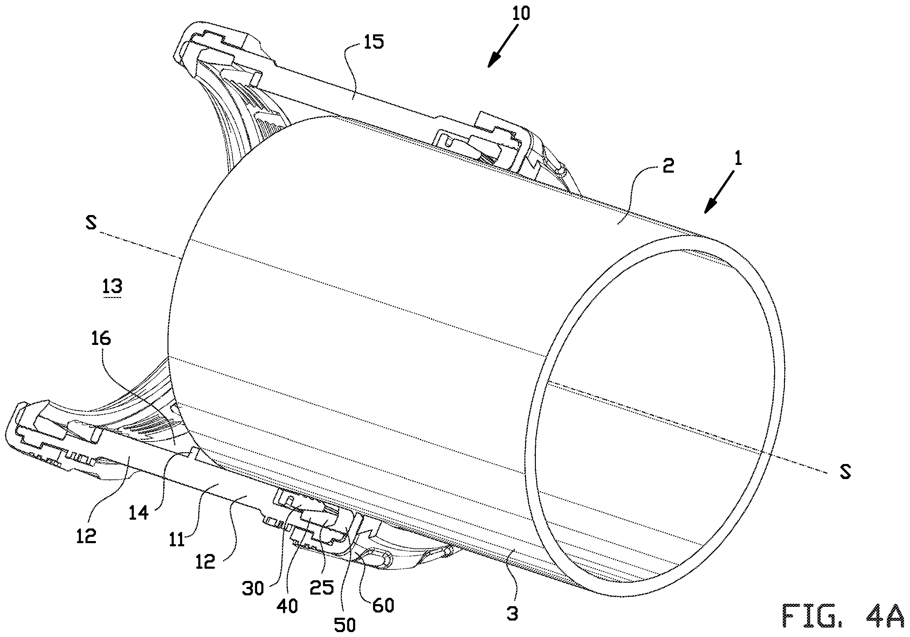

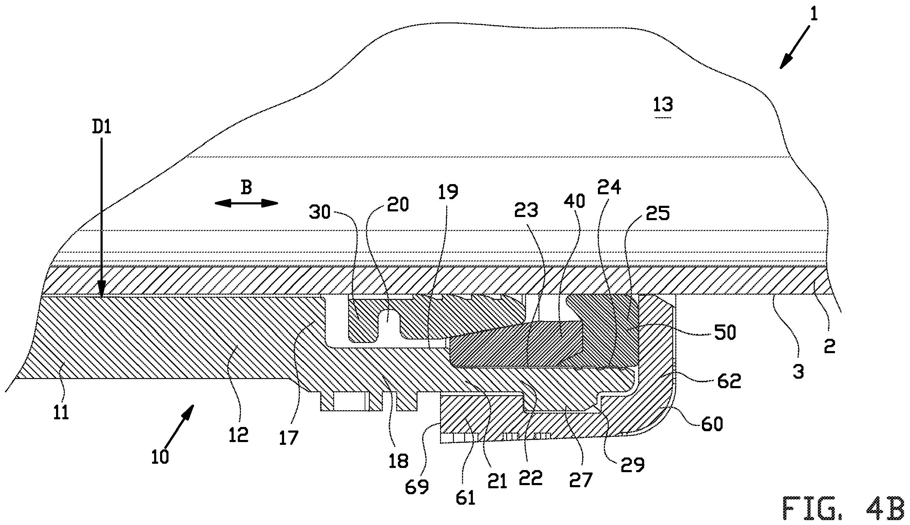

Figures 1A, 1B and 1C show an isometric view and two exploded views of a pipe coupling, in this example a straight coupling sleeve 10 for coupling two cylindrical pipes 1 according to an embodiment of the invention. Figure 2A shows a longitudinal section of this coupling sleeve 10 and figure 2B shows details thereof. Figures 3A and 4A show longitudinal sections of the coupling sleeve 10 in consecutive coupling positions, and figures 3A and 4B show details thereof.

The synthetic pipes 1 are low-pressure water pipes, for instance for the drainage of sewage water. In this example, the pipes 1 have a circle-cylindrical circumferential wall 2 with a smooth outer surface 3. The outside diameter of the pipes 1 typically is 32 millimeters, 40 millimeters, 50 millimeters, 75 millimeters, 90 millimeters, 110 millimeters, 125 millimeters, 160 millimeters or 200 millimeters. The pipes 1 are manufactured of a synthetic material. This may be a synthetic material that cannot be glued together on site to connect the parts in a watertight fashion, such as polyethylene (PE) or polypropylene (PP), or a synthetic material that can be glued together very well per se, such as polyvinyl chloride (PVC), but of which it is not advisable to glue them together for practical reasons or environmental technical reasons.

The coupling sleeve 10 is configured for entering into a watertight coupling with the pipes 1 without gluing them together. The coupling sleeve 10 comprises a casing 11 made of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA). Alternatively, the casing 11 is manufactured of a thermo-setting synthetic material or a composite synthetic material. The synthetic material may be fiber-reinforced synthetic material.

As can best be seen in figure 2A, the casing 11 is built symmetrically, having a center line S for the circumferential parts in this example having a constant radius. The casing 11 comprises two insertion parts 12 having insertion openings 13 for inserting the pipes 1 in direction A parallel to the center line S. The two insertion parts 12 terminate in a circumferential internal central bumper 14. In this example the pipe coupling is the straight coupling sleeve 10, but other configurations are also possible, such as a T-pipe coupling, Y-coupling or bend in which the insertion parts 12 have a different mutual orientation. The coupling sleeve 10 will be described below on the basis of the insertion part 12 and the parts accommodated therein on the right-hand side in the figures.

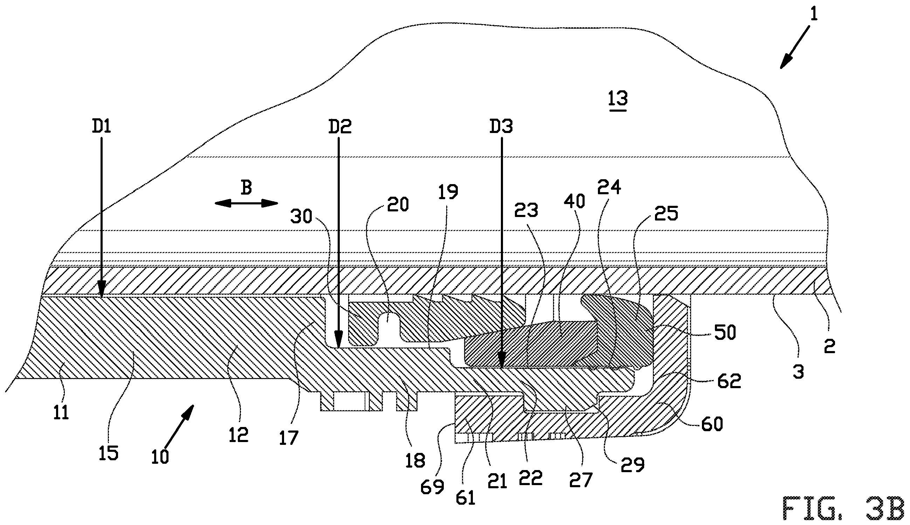

As can best be seen in figures 2A and 3B, the casing 11 comprises a cylindrical insertion wall 15 having a smooth inner surface 16 in which the inserted pipe 1 fits. Its inside diameter D1 corresponds to the outside diameter of the inserted pipe 1 wherein a small positive tolerance has been used so that the pipe 1, once inserted in direction A, can be shifted back and forth. Via a first diameter step 17, the insertion wall 15 merges into a first cylindrical accommodation wall 18 having a larger inside diameter D2 and having a smooth inner surface 19. It forms a first circumferential internal rebate 20 in which a grip ring 30 is accommodated. Via a second diameter step 21, the first accommodation wall 18 merges into a second cylindrical accommodation wall 22 having a larger inside diameter D3 and having a smooth third inner surface 23. It forms a second circumferential internal rebate 24 in which an annular insert piece 25 is accommodated. The insert piece 25 comprising a pinching ring 40 that merges into a seal 50.

The casing 11 comprises several circumferential ribs 28 that project from the exterior side of the insertion wall 15 for firmly retaining the casing 11. At the exterior side of the second accommodation wall 22, the casing 11 is provided with several projecting attachment cams 27 that are evenly distributed along the circumference. The attachment cams 27 have a cylindrical shape and at the side oriented to the insertion opening 13, they are provided with a first oblique pilot surface 29. A washer or locking ring 60 has been placed over the second accommodation wall 22, which washer engages onto the engagement cams 27 and which confines the insert piece 25.

As shown in figures 1B and 2B, the grip ring 30 is provided with a base ring 31 that is closed all around and has a cylindrical outer surface 32 which under a small positive tolerance abuts the inner surface 19 of the first accommodation wall 18, so that it is able to shift back and forth relative thereto in direction B parallel to the insertion direction A. The grip ring 30 is provided with elongated grip fingers 34 distributed all around, which fingers, via living hinges or a local narrowing 38 in the material, are flexibly connected to the base ring 31 and which extend therefrom in axial direction. At the free outer end at the side oriented towards the pipe 1, the grip fingers 34 are provided with a pilot edge 35 that is obliquely oriented to the center line S, so that they guide themselves around the inserted pipe 1, and with several grip teeth 36 which will then engage onto the outer surface 3 of the inserted pipe 1. As shown in figure 2B, the grip fingers 34 are provided with a smooth outer surface 37 abutting the pinching ring 40 and positioned at an angle of 1-15 degrees to the outer surface 32 and to the center line S. In this example, this angle is 10 degrees.

The grip ring 30 is manufactured of a synthetic material that is harder than the synthetic material of which the pipes 1 have been made, so that when exerting a radial pressure force the grip teeth 36 cause a local imprint in the pipes 1 with which the grip ring 30 engages onto the pipes 1. In this example, the grip ring 30 is manufactured of a thermoplastic synthetic material, preferably polyoxymethylene (POM), polysulfone (PSU) or polyphenylsulfone (PPSU) or a thermoplastic bioplastic, preferably polylactic acid (PLA). Alternatively, the grip ring 30 is manufactured of a thermo-setting synthetic material or a composite synthetic material. The synthetic material may be fiber-reinforced synthetic material. In order to increase the hardness, glass in the form of glass particles can be mixed into the synthetic material. Alternatively, the grip ring 30 is manufactured of a metal.

As shown in figures 1B and 2B, the pinching ring 40 has a cylindrical outer surface 41 abutting the inner surface 23 of the second accommodation wall 22, and a conically tapering inner surface 42 at an angle of 1-15 degrees to the outer surface 41 and center line S. In this example, this angle is 10 degrees. At the inside, the pinching ring 40 is provided with several cams 44 projecting from the inner surface 42. The cams 44 extend between the grip teeth 36 so that the grip ring 30 is able to rotate relative to the pinching ring 40 by a stroke limited by the intermediate space between the consecutive grip fingers 34. This limitation of the stroke can be overcome by exerting an increased rotary moment, which can be properly noticed on the at that moment hand-held pipe 1.

The pinching ring 40 is manufactured of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA), or a thermoplastic bioplastic, preferably polylactic acid (PLA). Alternatively, the casing 11 is manufactured of a thermo-setting synthetic material or a composite synthetic material. The synthetic material may be fiber-reinforced synthetic material. The pinching ring 40 and the grip ring 30 together form the locking for the inserted pipe 1.

As shown in figures 1B and 2B, the seal 50 of the insert piece 25 is provided with a base ring 51 having an end face 52. The seal 50 is provided with circumferential external ribs 53 that project from the base ring 51 and that abut the third inner surface 23 in a sealing fashion. Towards the center line S, the base ring 51 merges into a tapering, circumferential seal flap 55. The seal flap 55 is provided with an inwardly oriented pilot surface 57 oblique to the center line S, and below the seal flap 55 an annular space 58 is situated through which the seal flap 55 is able to bend in the direction of the second accommodation wall 22. Due to the pilot surface 57 and the annular space 58, the pipe 1 can be inserted without the pipe 1 having to be provided with an end beveling and without the necessity of applying a lubricant. When the pipe 1 has been inserted, the seal flap 55 engages onto the pipe 1 in a sealing fashion.

The seal 50 is manufactured of a flexible synthetic material, in this example a thermoplastic elastomer (TPE) or technical rubber, preferably an olefin-based cross-linked thermoplastic elastomer (TPV), preferably Ethylene Propylene Diene Monomer (EPDM) optionally mixed with polypropylene (PP). Alternatively, the seal 50 is manufactured of SBR, NBR, silicone or PUR. The insert piece 25 can be manufactured via two-component injection molding from the various materials for the pinching ring 40 and the seal 50.

As shown in figures 1B, 1C and 2B the locking ring 60 comprises a cylindrical circumferential wall 61 with a free end edge 69. Opposite the end edge 69, the circumferential wall 61 merges into a pressure flange 62 that is inwardly and transversely oriented thereto and which abuts the end face 52 of the seal 50. At the exterior side, the circumferential wall 61 is provided with a grip-enhancing profile 63 in order to tighten the locking ring 60 properly in tangential direction C about the center line S by hand or using a tool. The locking ring 60 is manufactured of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA). Alternatively, the casing 11 is manufactured of a thermo-setting synthetic material or a composite synthetic material. The synthetic material may be fiber-reinforced synthetic material.

At the interior side, the circumferential wall 61 of the locking ring 60 is provided with a guide groove 65 for each attachment cam 27 in which groove the attachment cam 27 is accommodated at a positive tolerance. In series, the guide groove 65 comprises a receiving track 66, a tensioning track 67 and an attachment track 68. The tensioning track 67 has a tangential directional component and a smaller axial directional component and has a constant pitch. The receiving track 66 bends away at a larger pitch and terminates in the end edge 69. The tensioning track 67 forms an elongated chamber in which for the transition to the receiving track 66 a group of first snap cams 70 extend, and in the transition to the attachment track 68 a second snap cam 71 extends. Due to the flexibility of the material, the attachment cam 27 is able to pass by the snap cams 70, 71 when the locking ring 60 is tightened in the rotary direction C at an increased moment. For each attachment cam 27 to be accommodated, the circumferential wall 61 is provided with a second pilot surface 72 in the end edge 69, which pilot surface is oriented obliquely to the center line S and cooperates with the first pilot surface 29 of the attachment cam 27 to be accommodated. In the direction of the center line S, the second pilot surface 72 is situated straight in front of the groups of first snap cams 70. The second pilot surface 72 terminates in a threshold 73 towards the tensioning track 67.

The coupling sleeve 10 can be assembled by consecutively inserting the grip ring 30 and the insert piece 25 in the first internal rebate 20 and the second internal rebate 24, respectively. Alternatively, the grip ring 30 and the insert piece 25 are placed on top of one another in the locking ring 60. Subsequently, the locking ring 60 can be secured to the casing 11 by placing the first pilot surfaces 29 and second pilot surfaces 72 on top of one another and pushing on the locking ring 60 parallel to the center line S. Due to the flexibility of the material of the locking ring 60 and the casing 11, the attachment cams 27 pop into the guide grooves 65. The attachment cams 27 are confined between the groups of first snap cams 70. In this standby position of the locking ring 60 predetermined by the first snap cams 70, the grip ring 30 is confined without play in the direction of the center line S against the first diameter step 17, and the locking ring 60 keeps the insert piece 25 against it in series without play, wherein the insert piece 25 is still spaced apart from the second diameter step 21. The default or ex-factory setting of the locking ring 60 is the standby position.

When connecting the pipe 1 to the coupling sleeve 10 with the locking ring 60 in its standby position, it is inserted via the insertion opening 13 in direction A, wherein the seal 50 engages onto the smooth outer surface 3 of the pipe 1 in a sealing fashion. The pipe 1 is inserted as deeply as possible, preferably until it abuts the bumper 14. The pipe 1 has then been slid through the grip ring 30, wherein the grip fingers 34 slide along the outside and keep the grip ring 30 in its first position against the first diameter step 17. Subsequently, the pipe 1 is pulled back in opposite direction, as a result of which the grip fingers 34 slide along with the pipe 1 in direction B along the conically tapering inner surface 42, and the grip teeth 36 locally pierce the circumferential wall 2 as they are harder than the pipe 1, until this wedge action no longer allows an onward returning motion of the pipe 1. In the standby position of the locking ring 60 it is still possible to rotate the pipe 1 about center line S relative to the coupling sleeve 10 because the grip ring 30 is still able to rotate relative to the pinching ring 40 or because the pinching ring 40 is still able to rotate along with the grip ring 30 in the internal rebates 20, 24. The grip teeth 36 then remain standing in the pipe 1 and the grip ring 30 rotates along in its entirety with the pipe 1. This rotation can be fixated by rotating the locking ring 60 in direction C, as a result of which the attachment cams 27 come out of the groups of first snap cams 70 and via the tensioning tracks 67 and the second snap cams 71 end up in the attachment tracks 68. This is the fixed position of the locking ring 60 predetermined by the second snap cams 71. Upon the transition from the standby position into the fixed position, the locking ring 60 pushes the pinching ring 40 more deeply under the grip fingers 34 until up against the second diameter step 21. Due to the increased friction, the grip ring 30 and as a result the pipe 1 effectively can no longer rotate about its center line relative to the casing 11. Upon the transition from the standby position into the fixed position, the seal 50 is axially compressed between the locking ring 60 and the pinching ring 40. Due to compressing, the seal 50 is more firmly pressed radially against the pipe 1, as a result of which the pipe 1 can no longer rotate relative to the casing 11. The degree at which the pinching ring 40 ends up more deeply under the grip fingers 34, or the seal 50 is compressed, depends on the dimensioning of the active parts of the insert piece 25 and grip ring 30 that are in serial contact.

The coupling sleeve 10 may optionally be uncoupled from the pipe 1 again by loosening the locking ring 60 in direction C, as a result of which the attachment cams 27 will pass along the groups of first snap cams 70 once more to leave the guide grooves 65 via the receiving tracks 66. The locking ring 60 is in its predetermined disassembling position when the attachment cams 27 are at the end edge 69 so that the locking ring 60 can be removed from the casing 11. By subsequently moving the pipe 1 back and forth parallel to the insertion direction A, the grip ring 30 pushes the insert piece 25 back. As a result the wedge action of the pinching ring 40 is ended and the grip fingers 34 come away from the pipe 1. The pipe 1 can then be taken out and the coupling sleeve 1 can be put ready again for connecting the pipe 1 by mounting the locking ring 60 in the standby position.

The above description is included to illustrate the operation of preferred embodiments of the invention and not to limit the scope of the invention, which is defined by the appended claims. Starting from the above explanation many variations that fall within the scope of the present invention will be evident to an expert.

## Claims

1. Assembly of a synthetic cylindrical pipe (1) and a pipe coupling (10) for connection to the synthetic pipe, wherein the pipe coupling comprises an insertion part (12) having an insertion opening (13) for in an insertion direction (A) inserting the synthetic pipe into the pipe coupling, wherein the insertion part comprises a synthetic casing (11) that is provided with a circumferential insertion wall (15) in which the pipe fits (D1), wherein via a first diameter step the insertion wall merges into a first circumferential accommodation wall (18) having a larger inside diameter (D2) than the insertion wall (15), wherein the first accommodation wall bounds a first rebate (20), wherein the insertion part comprises a grip ring (30) that is accommodated in the first rebate and that engages around the inserted pipe, and a pinching ring (40) extending at least partially around the grip ring, wherein the pinching ring is provided with an inner surface (42) oriented towards the grip ring for wedge action onto the grip ring, wherein in the insertion direction (A) the grip ring (30) can be moved in the first rebate (20) relative to the pinching ring (40) between a first position, in which the pipe can be inserted through the grip ring towards the insertion wall (15), and a second position closer towards the insertion opening (13), in which the grip ring (30) fixedly engages around and onto the inserted pipe, wherein during the movement from the first position into the second position the inner surface (42) of the pinching ring (40) urges the grip ring (30) into fixed engagement onto the pipe (1) due to the wedge action, wherein the insertion part (12) comprises a circumferential seal (50) within the casing (11) which spaced apart from the grip ring engages around and onto the pipe (1) with a pressure force, and a washer (60) that engages onto the casing and that confines the grip ring (30) in the first rebate (20) via the pinching ring (40), wherein the washer (60) can be rotated relative to the casing (11) from a predetermined standby position into a predetermined fixed position and/or into a predetermined disassembling position, wherein in the standby position the grip ring (30) in the second position engages fixedly around and onto the inserted pipe (1), in the fixed position relative to the standby position the pinching ring (40) has been moved towards the grip ring (30) and the wedge action of the pinching ring onto the grip ring has been increased and/or the pressure force of the seal (50) on the pipe (1) has been increased, and in the disassembling position the washer (60) is or gets out of engagement with the casing (11).

2. Assembly according to claim 1, wherein the grip ring (30) is provided with a base ring (31) and grip fingers (34) projecting therefrom, which fingers are distributed around the base ring and extend from the base ring, parallel to the insertion direction (A), wherein the grip fingers (34) preferably have a free outer end which is oriented from the base ring (31) towards the insertion opening (13).

3. Assembly according to any one of the preceding claims, wherein the grip ring (30) and the pinching ring (40) have parts (34; 44) that engage onto one another for limiting a rotation of the grip ring relative to the pinching ring, wherein the parts (34; 44) that engage onto one another preferably limit the rotation of the grip ring (30) relative to the pinching ring (40) up to a predetermined stroke.

4. Assembly according to claim 3, wherein the grip ring (30) is provided with a base ring (31) and grip fingers (34) projecting therefrom, which fingers are distributed around the base ring and extend from the base ring, parallel to the insertion direction (A), wherein the pinching ring is provided with one or more cams (44) that project inward from the inner surface (42) and extend between consecutive grip fingers (34).

5. Assembly according to any one of the preceding claims, wherein the first accommodation wall (18) of the insertion part merges via a second diameter step into a second accommodation wall (22) having a larger inside diameter (D3) than the first accommodation wall, wherein the second accommodation wall bounds a second rebate (24) in which the pinching ring (40) is accommodated.

6. Assembly according to any one of the preceding claims, wherein the pinching ring (40) and the seal (50) are connected to one another or form one unity, wherein the pinching ring and the seal preferably form an insert piece (25) placed in the casing as a unity, wherein the unity is preferably manufactured via two-component injection molding.

7. Assembly according to any one of the preceding claims, wherein in the disassembling position counter the insertion direction (A), the washer (60) is positioned at a larger distance from the grip ring (30) than it is in the standby position and/or wherein in the fixed position in the insertion direction (A), the washer (60) is positioned at a shorter distance from the grip ring (30) than it is in the standby position.

8. Assembly according to any one of the preceding claims, wherein in the standby position, in the fixed position and in the positions in between them, the washer (60) is in engagement with the casing (11).

9. Assembly according to any one of the preceding claims, wherein the insertion part (12) and the washer (60) are provided with attachment cams (27) that are distributed around the casing (11) and that extend in guide grooves (65), wherein the guide grooves have a tensioning track (67) with a tangential directional component in the rotary direction and a smaller axial directional component parallel to the insertion direction (A).

10. Assembly according to claim 9, wherein at least one of the guide grooves (65) is provided with a first snap cam (70) for cooperation with the attachment cam (27), wherein the attachment cam is able to pass by the first snap cam while the material of the first snap cam and/or the attachment cam deforms, wherein the first snap cam and the attachment cam define the predetermined standby position.

11. Assembly according to claim 9 or 10, wherein at least one of the guide grooves (65) is provided with a second snap cam (71) for cooperation with the attachment cam (27), wherein the attachment cam is able to pass by the second snap cam due to deformation of the material of the second snap cam and/or the attachment cam, wherein the second snap cam and the attachment cam define the predetermined fixed position.

12. Assembly according to any one of the claims 9-11, wherein the attachment cams (27) project from an exterior side of the casing (11) and the guide grooves (65) are situated in the washer (60).

13. Assembly according to claim 12, wherein the washer (60) is provided with pilot surfaces (72) situated along the guide grooves (65) and positioned obliquely to the insertion direction (A) for receiving the attachment cams (27), wherein the pilot surfaces merge into thresholds (73) towards the guide grooves (65).

14. Assembly according to claim 12 or 13, wherein the washer (60) is provided with a circumferential wall (61) extending around the casing (11), wherein the circumferential wall merges into a confining wall (62) oriented towards the pipe (1) for confining the grip ring (30) in the first rebate (20), wherein the circumferential wall (61) has a free end edge (69) and the guide grooves (65) terminate in the free end edge.

15. Assembly according to claims 13 and 14, wherein in the rotary direction the guide grooves (65) terminate in the free end edge (69), spaced apart from the pilot surfaces (72), wherein the washer is manufactured of a synthetic material.

16. Method for assembling a pipe coupling (10) for connection to a synthetic pipe (1), wherein the pipe coupling (10) comprises an insertion part (12) having an insertion opening (13) for in an insertion direction (A) inserting the synthetic pipe into the pipe coupling, wherein the insertion part comprises a synthetic casing (11) that is provided with a circumferential insertion wall (15) in which the pipe fits (D1), wherein via a first diameter step the insertion wall merges into a first circumferential accommodation wall (18) having a larger inside diameter (D2) than the insertion wall (15), wherein the first accommodation wall bounds a first rebate (20), wherein the insertion part comprises a grip ring (30) that is accommodated in the first rebate and that engages around the inserted pipe, a pinching ring (40) extending at least partially around the grip ring for wedge action onto the grip ring, a circumferential seal (50) within the casing (11) which spaced apart from the grip ring, engages around and onto the pipe with a pressure force, and a washer (60) that engages onto the casing and that confines the grip ring in the first rebate via the pinching ring (40), wherein the washer can be rotated relative to the casing from a predetermined standby position into a predetermined disassembling position, wherein in the standby position the grip ring engages fixedly around and onto the inserted pipe (1), and in the disassembling position the washer (60) is or gets out of engagement with the casing (11), wherein the washer (60) is provided with a circumferential wall (61) having a free end edge (69) that extends around the casing (11) and that merges into a confining wall (62) oriented towards the pipe (1) for confining the grip ring (30) in the first rebate (20), wherein the insertion part (12) is provided with attachment cams (27) that are distributed around the casing (11), and the washer (60) is provided with guide grooves (65) in the circumferential wall (61) in which grooves (65) the attachment cams (27) extend, wherein the guide grooves (65) have a tensioning track (67) with a tangential directional component in the rotary direction and a smaller axial directional component parallel to the insertion direction (A), wherein the washer (60) is provided with pilot surfaces (72) situated along the guide grooves (65) and positioned obliquely to the insertion direction (A) for receiving the attachment cams (27), wherein the pilot surfaces merge into thresholds (73) towards the guide grooves (65), wherein the method comprises the placing of the grip ring (30), the pinching ring (40) and the seal (50) in the casing (11) or in the washer (60), moving the casing (11) and the washer (60) towards each other in the insertion direction (A) with the pilot surfaces (72) being aligned with the attachment cams (27), and via the pilot surfaces guiding the attachment cams past the thresholds (73) into the guide grooves (65), wherein the washer arrives in the standby position, wherein the guide grooves (65) preferably terminate in the free end edge (69), spaced apart from the pilot surfaces (72).

## Patentansprüche

1. Anordnung aus einem zylindrischen Kunststoffrohr (1) und einer Rohrmuffe (10) zum Verbinden mit dem zylindrischen Kunststoffrohr, wobei die Rohrmuffe ein Einführteil (12) mit einer Einführöffnung (13) zum Einführen des Kunststoffrohrs in einer Einführrichtung (A) in die Rohrmuffe umfasst, wobei das Einführteil einen Kunststoffmantel (11) umfasst, der mit einer zirkumferenziellen Einführwand (15) versehen ist, in die das Rohr passt (D1), wobei die Einführwand über eine Stufe mit einem ersten Durchmesser in eine erste zirkumferenzielle Aufnahmewand (18) übergeht, die einen größeren Innendurchmesser (D2) als die Einführwand (15) hat, wobei die erste Aufnahmewand einen ersten Falz (20) begrenzt, wobei das Einführteil einen Greifring (30), der in dem ersten Falz untergebracht ist und um das eingeführte Rohr im Eingriff ist, und einen Klemmring (40) umfasst, der sich zumindest teilweise um den Greifring erstreckt, wobei der Klemmring mit einer zum Greifring gerichteten Innenfläche (42) für eine Keilwirkung auf den Greifring versehen ist, wobei der Greifring (30) im ersten Falz (20) in der Einführrichtung (A) relativ zum Klemmring (40) zwischen einer ersten Position, in der das Rohr durch den Greifring in Richtung der Einführwand (15) eingeführt werden kann, und einer näher bei der Einführöffnung (13) liegenden zweiten Position bewegt werden kann, in der der Greifring (30) fest um das eingeführte Rohr und auf ihm im Eingriff ist, wobei die Innenfläche (42) des Klemmrings (40) während der Bewegung von der ersten Position in die zweite Position den Greifring (30) durch die Keilwirkung in einen festen Eingriff auf dem Rohr (1) drückt, wobei das Einführteil (12) eine zirkumferenzielle Dichtung (50) in dem Mantel (11), die beabstandet von dem Greifring um das Rohr (1) und auf ihm mit einer Druckkraft im Eingriff ist, und einen Überwurfring (60) umfasst, der auf dem Mantel im Eingriff ist und den Greifring (30) in dem ersten Falz (20) über den Klemmring (40) einsperrt, wobei der Überwurfring (60) relativ zu dem Mantel (11) aus einer vorgegebene Bereitschaftsposition in eine vorgegebene feste Position und/oder in eine vorgegebene Demontageposition gedreht werden kann, wobei in der Bereitschaftsposition der Greifring (30) in der zweiten Position fest um das eingeführte Rohr (1) und auf ihm im Eingriff ist, in der festen Position relativ zu der Bereitschaftsposition der Klemmring (40) in Richtung des Greifrings (30) bewegt wurde und die Keilwirkung des Klemmrings auf den Greifring erhöht wurde und/oder die Druckkraft der Dichtung (50) auf das Rohr (1) erhöht wurde, und in der Demontageposition der Überwurfring (60) aus dem Eingriff mit dem Mantel (11) ist oder gerät.

2. Anordnung nach Anspruch 1, wobei der Greifring (30) mit einem Fußring (31) und davon abstehenden Greiffingern (34) versehen ist, wobei die Finger um den Fußring verteilt sind und sich von dem Fußring parallel zur Einführrichtung (A) erstrecken, wobei die Greiffinger (34) vorzugsweise ein freies äußeres Ende aufweisen, das vom Fußring (31) zur Einführöffnung (13) gerichtet ist.

3. Anordnung nach einem der vorhergehenden Ansprüche, wobei der Greifring (30) und der Klemmring (40) Teile (34; 44) aufweisen, die aufeinander in Eingriff kommen, um eine Drehung des Greifrings relativ zum Klemmring zu begrenzen, wobei die Teile (34; 44), die aufeinander in Eingriff kommen, vorzugsweise die Drehung des Greifrings (30) relativ zum Klemmring (40) bis zu einem vorgegebenen Hub begrenzen.

4. Anordnung nach Anspruch 3, wobei der Greifring (30) mit einem Fußring (31) und davon abstehenden Greiffingern (34) versehen ist, wobei die Finger um den Fußring verteilt sind und sich von dem Fußring parallel zur Einführrichtung (A) erstrecken, wobei der Klemmring mit einem oder mehr Nocken (44) versehen ist, die von der Innenfläche (42) nach innen vorstehen und sich zwischen aufeinanderfolgenden Greiffingern (34) erstrecken.

5. Anordnung nach einem der vorhergehenden Ansprüche, wobei die erste Aufnahmewand (18) des Einführteils über eine Stufe mit einem zweiten Durchmesser in eine zweite Aufnahmewand (22) übergeht, die einen größeren Innendurchmesser (D3) als die erste Aufnahmewand hat, wobei die zweite Aufnahmewand einen zweiten Falz (24) begrenzt, in dem der Klemmring (40) untergebracht ist.

6. Anordnung nach einem der vorhergehenden Ansprüche, wobei der Klemmring (40) und die Dichtung (50) miteinander verbunden sind oder eine Einheit bilden, wobei der Klemmring und die Dichtung vorzugsweise ein Einsatzstück (25) bilden, das in dem Mantel als eine Einheit platziert ist, wobei die Einheit vorzugsweise durch Zweikomponenten-Spritzgießen hergestellt ist.

7. Anordnung nach einem der vorhergehenden Ansprüche, wobei der Überwurfring (60) in der Demontageposition entgegen der Einführrichtung (A) in einem größeren Abstand vom Greifring (30) positioniert ist, als er es in der Bereitschaftsposition ist, und/oder wobei der Überwurfring (60) in der festen Position in der Einführrichtung (A) in einem kürzeren Abstand von dem Greifring (30) positioniert ist, als er es in der Bereitschaftsposition ist.

8. Anordnung nach einem der vorhergehenden Ansprüche, wobei der Überwurfring (60) in der Bereitschaftsposition, in der festen Position und in den Positionen zwischen ihnen mit dem Mantel (11) im Eingriff ist.

9. Anordnung nach einem der vorhergehenden Ansprüche, wobei das Einführteil (12) und der Überwurfring (60) mit Befestigungsnocken (27) versehen sind, die um den Mantel (11) verteilt sind und sich in Führungsnuten (65) erstrecken, wobei die Führungsnuten eine Spannbahn (67) mit einer tangentialen Richtungskomponente in der Drehrichtung und einer kleineren axialen Richtungskomponente parallel zur Einführrichtung (A) aufweisen.

10. Anordnung nach Anspruch 9, wobei mindestens eine der Führungsnuten (65) mit einem ersten Schnappnocken (70) für das Zusammenwirken mit dem Befestigungsnocken (27) versehen ist, wobei der Befestigungsnocken an dem ersten Schnappnocken vorbeigehen kann, während sich das Material des ersten Schnappnockens und/oder des Befestigungsnockens verformt, wobei der erste Schnappnocken und der Befestigungsnocken die vorgegebene Bereitschaftsposition definieren.

11. Anordnung nach Anspruch 9 oder 10, wobei mindestens eine der Führungsnuten (65) mit einem zweiten Schnappnocken (71) für das Zusammenwirken mit dem Befestigungsnocken (27) versehen ist, wobei der Befestigungsnocken dank der Verformung des Materials des zweiten Schnappnockens und/oder des Befestigungsnockens an dem zweiten Schnappnocken vorbeigehen kann, wobei der zweite Schnappnocken und der Befestigungsnocken die vorgegebene feste Position definieren.

12. Anordnung nach einem der Ansprüche 9 bis 11, wobei die Befestigungsnocken (27) von einer Außenseite des Mantels (11) vorstehen und sich die Führungsnuten (65) in dem Überwurfring (60) befinden.

13. Anordnung nach Anspruch 12, wobei der Überwurfring (60) mit Führungsflächen (72) versehen ist, die entlang den Führungsnuten (65) gelegen und schräg zur Einführrichtung (A) positioniert sind, um die Befestigungsnocken (27) aufzunehmen, wobei die Führungsflächen in Schwellen (73) in Richtung der Führungsnuten (65) übergehen.

14. Anordnung nach Anspruch 12 oder 13, wobei der Überwurfring (60) mit einer Umfangswand (61) versehen ist, die sich um den Mantel (11) erstreckt, wobei die Umfangswand in eine zu dem Rohr (1) gerichtete einschränkende Wand (62) zum Einsperren des Greifrings (30) in dem ersten Falz (20) übergeht, wobei die Umfangswand (61) einen freie Endrand (69) aufweist und die Führungsnuten (65) in dem freien Endrand enden.

15. Anordnung nach Anspruch 13 und 14, wobei die Führungsnuten (65) in der Drehrichtung in dem freien Endrand (69) enden, der von den Führungsflächen (72) beabstandet ist, wobei der Überwurfring aus einem Kunststoff hergestellt ist.

16. Verfahren zum Montieren einer Rohrmuffe (10) zum Verbinden mit einem Kunststoffrohr (1), wobei die Rohrmuffe (10) ein Einführteil (12) mit einer Einführöffnung (13) zum Einführen des Kunststoffrohrs in einer Einführrichtung (A) in die Rohrmuffe umfasst, wobei das Einführteil einen Kunststoffmantel (11) umfasst, der mit einer zirkumferenziellen Einführwand (15) versehen ist, in die das Rohr passt (D1), wobei die Einführwand über eine Stufe mit einem ersten Durchmesser in eine erste zirkumferenzielle Aufnahmewand (18) übergeht, die einen größeren Innendurchmesser (D2) als die Einführwand (15) hat, wobei die erste Aufnahmewand einen ersten Falz (20) begrenzt, wobei das Einführteil einen Greifring (30), der in dem ersten Falz untergebracht und um das eingeführte Rohr im Eingriff ist, einen Klemmring (40), der sich zumindest teilweise um den Greifring für eine Keilwirkung auf den Greifring erstreckt, eine zirkumferenzielle Dichtung (50) in dem Mantel (11), die beabstandet von dem Greifring um das Rohr und auf ihm mit einer Druckkraft im Eingriff ist, und einen Überwurfring (60) umfasst, der auf dem Mantel im Eingriff ist und den Greifring in dem ersten Falz über den Klemmring (40) einsperrt, wobei der Überwurfring relativ zu dem Mantel aus einer vorgegebenen Bereitschaftsposition in eine vorgegebene Demontageposition gedreht werden kann, wobei der Greifring in der Bereitschaftsposition fest um das eingeführte Rohr (1) und auf ihm im Eingriff ist und der Überwurfring (60) in der Demontageposition aus dem Eingriff mit dem Mantel (11) ist oder gerät, wobei der Überwurfring (60) mit einer Umfangswand (61) mit einem freien Endrand (69) versehen ist, die sich um den Mantel (11) erstreckt und in eine zu dem Rohr (1) gerichtete einschränkende Wand (62) zum Einsperren des Greifrings (30) in dem ersten Falz (20) übergeht, wobei das Einführteil (12) mit Befestigungsnocken (27) versehen ist, die um den Mantel (11) verteilt sind, und der Überwurfring (60) mit Führungsnuten (65) in der Umfangswand (61) versehen ist, in welchen Nuten (65) sich die Befestigungsnocken (27) erstrecken, wobei die Führungsnuten (65) eine Spannbahn (67) mit einer tangentialen Richtungskomponente in der Drehrichtung und einer kleineren axialen Richtungskomponente parallel zur Einführrichtung (A) aufweisen, wobei der Überwurfring (60) mit Führungsflächen (72) versehen ist, die entlang den Führungsnuten (65) gelegen und schräg zu der Einführrichtung (A) positioniert sind, um die Befestigungsnocken (27) aufzunehmen, wobei die Führungsflächen in Schwellen (73) in Richtung der Führungsnuten (65) übergehen, wobei das Verfahren das Anordnen des Greifrings (30), des Klemmrings (40) und der Dichtung (50) in dem Mantel (11) oder in dem Überwurfring (60), das Bewegen des Mantels (11) und des Überwurfrings (60) aufeinander zu in der Einführrichtung (A) mit den mit den Befestigungsnocken (27) ausgerichteten Führungsflächen (72) und das Führen der Befestigungsnocken über die Führungsflächen vorbei an den Schwellen (73) in die Führungsnuten (65) umfasst, wobei der Überwurfring in die Bereitschaftsposition gelangt, wobei die Führungsnuten (65) vorzugsweise in dem freien Endrand (69) enden, der von den Führungsflächen (72) beabstandet ist.

## Revendications

1. Ensemble composé d'un tuyau cylindrique synthétique (1) et d'un raccord de tuyau (10) pour le raccordement au tuyau synthétique, dans lequel le raccord de tuyau comprend une partie d'insertion (12) ayant une ouverture d'insertion (13) pour insérer le tuyau synthétique dans le raccord de tuyau suivant une direction d'insertion (A), dans lequel la partie d'insertion comprend un boîtier synthétique (11) qui est prévu avec une paroi d'insertion circonférentielle (15) dans laquelle s'adapte le tuyau (D1), dans lequel, via un épaulement de premier diamètre, la paroi d'insertion fusionne avec une première paroi de logement circonférentielle (18) ayant un plus grand diamètre intérieur (D2) que la paroi d'insertion (15), dans lequel la première paroi de logement borde une première feuillure (20), dans lequel la partie d'insertion comprend une bague de préhension (30) qui est logée dans la première feuillure et qui est engagée autour du tuyau inséré, et une bague de pincement (40) s'étendant au moins partiellement autour de la bague de préhension, dans lequel la bague de pincement est prévue avec une surface interne (42) orientée vers la bague de préhension pour une action de coin sur la bague de préhension, dans lequel la bague de préhension (30) peut être déplacée dans la première feuillure (20) suivant la direction d'insertion (A) par rapport à la bague de pincement (40) entre une première position, dans laquelle le tuyau peut être inséré à travers la bague de préhension vers la paroi d'insertion (15), et une seconde position plus proche de l'ouverture d'insertion (13), dans laquelle la bague de préhension (30) est engagée, de manière fixe, autour et sur le tuyau inséré, dans lequel pendant le déplacement de la première position à la seconde position, la surface interne (42) de la bague de pincement (40) sollicite la bague de préhension (30) en engagement fixe sur le tuyau (1) en raison de l'action de coin, dans lequel la partie d'insertion (12) comprend un joint d'étanchéité circonférentiel (50) à l'intérieur du boîtier (11) qui, espacé de la bague de préhension, est engagé autour et sur le tuyau (1) avec une force de pression, et une rondelle (60) qui est engagée sur le boîtier et qui confine la bague de préhension (30) dans la première feuillure (20), via la bague de pincement (40), dans lequel la rondelle (60) peut être entraînée en rotation par rapport au boîtier (11) à partir d'une position d'attente prédéterminée, dans une position fixe prédéterminée et/ou dans une position de démontage prédéterminée, dans lequel, dans la position d'attente, la bague de préhension (30), dans la seconde position, est engagé, de manière fixe, autour et sur le tuyau (1) inséré, dans la position fixe par rapport à la position d'attente, la bague de pincement (40) a été déplacée vers la bague de préhension (30) et l'action de coin de la bague de pincement sur la bague de préhension a été accrue et/ou la force de pression du joint d'étanchéité (50) sur le tuyau (1) a été augmentée, et dans la position de démontage, la rondelle (60) désengagée ou se désengage du boîtier (11).

2. Ensemble selon la revendication 1, dans lequel la bague de préhension (30) est prévue avec une bague de base (31) et des doigts de préhension (34) faisant saillie depuis cette dernière, lesquels doigts sont répartis autour de la bague de base et s'étendent à partir de la bague de base, parallèlement à la direction d'insertion (A), dans lequel les doigts de préhension (34) ont de préférence une extrémité externe libre qui est orientée depuis la bague de base (31) vers l'ouverture d'insertion (13).

3. Ensemble selon l'une quelconque des revendications précédentes, dans lequel la bague de préhension (30) et la bague de pincement (40) ont des parties (34 ; 44), qui sont engagées l'une avec l'autre, pour limiter une rotation de la bague de préhension par rapport à la bague de pincement, dans lequel les parties (34 ; 44) qui sont engagées l'une avec l'autre limitent de préférence la rotation de la bague de préhension (30) par rapport à la bague de pincement (40) jusqu'à une course prédéterminée.

4. Ensemble selon la revendication 3, dans lequel la bague de préhension (30) est prévue avec une bague de base (31) et des doigts de préhension (34) faisant saillie depuis cette dernière, lesquels doigts sont répartis autour de la bague de base et s'étendent depuis la bague de base, parallèlement à la direction d'insertion (A), dans lequel la bague de pincement est prévue avec une ou plusieurs cames (44) qui font saillie vers l'intérieur à partir de la surface interne (42) et s'étendent entre des doigts de préhension (34) consécutifs.

5. Ensemble selon l'une quelconque des revendications précédentes, dans lequel la première paroi de logement (18) de la partie d'insertion fusionne, via un épaulement de second diamètre, avec une seconde paroi de logement (22) ayant un plus grand diamètre intérieur (D3) que la première paroi de logement, dans lequel la seconde paroi de logement borde une seconde feuillure (24) dans laquelle la bague de pincement (40) est logée.

6. Ensemble selon l'une quelconque des revendications précédentes, dans lequel la bague de pincement (40) et le joint d'étanchéité (50) sont raccordés l'un à l'autre ou forment une unité, dans lequel la bague de pincement et le joint d'étanchéité forment de préférence une pièce d'insert (25) placée dans le boîtier en tant qu'unité, dans lequel l'unité est de préférence fabriquée via un moulage par injection à deux composants.

7. Ensemble selon l'une quelconque des revendications précédentes, dans lequel, dans la position de démontage à l'opposé de la direction d'insertion (A), la rondelle (60) est positionnée à une plus grande distance de la bague de préhension (30) qu'elle ne l'est dans la position d'attente et/ou dans lequel, dans la position fixe suivant la direction d'insertion (A), la rondelle (60) est positionnée à une plus courte distance de la bague de préhension (30) qu'elle ne l'est dans la position d'attente.

8. Ensemble selon l'une quelconque des revendications précédentes, dans lequel dans la position d'attente, dans la position fixe et dans les positions entre les deux, la rondelle (60) est engagée avec le boîtier (11).

9. Ensemble selon l'une quelconque des revendications précédentes, dans lequel la partie d'insertion (12) et la rondelle (60) sont prévues avec des cames de fixation (27) qui sont réparties autour du boîtier (11) et qui s'étendent dans des rainures de guidage (65), dans lequel les rainures de guidage ont une voie de tension (67) avec un composant directionnel tangentiel suivant la direction de rotation et un plus petit composant directionnel axial parallèle à la direction d'insertion (A).

10. Ensemble selon la revendication 9, dans lequel au moins l'une des rainures de guidage (65) est prévue avec une première came d'encliquetage (70) pour coopérer avec la came de fixation (27), dans lequel la came de fixation est propre à franchir la première came d'encliquetage par déformation du matériau de la première came d'encliquetage et/ou de la came de fixation, dans lequel la première came d'encliquetage et la came de fixation définissent la position d'attente prédéterminée.

11. Ensemble selon la revendication 9 ou 10, dans lequel au moins l'une des rainures de guidage (65) est prévue avec une seconde came d'encliquetage (71) pour coopérer avec la came de fixation (27), dans lequel la came de fixation est propre à franchir la seconde came d'encliquetage par déformation du matériau de la seconde came d'encliquetage et/ou de la came de fixation, dans lequel la seconde came d'encliquetage et la came de fixation définissent la position fixe prédéterminée.

12. Ensemble selon l'une quelconque des revendications 9 à 11, dans lequel les cames de fixation (27) font saillie depuis un côté extérieur du boîtier (11) et les rainures de guidage (65) sont situées dans la rondelle (60).

13. Ensemble selon la revendication 12, dans lequel la rondelle (60) est prévue avec des surfaces pilotes (72) situées le long des rainures de guidage (65) et positionnées de manière oblique par rapport à la direction d'insertion (A) pour recevoir les cames de fixation (27), dans lequel les surfaces pilotes fusionnent avec des seuils (73) vers les rainures de guidage (65).

14. Ensemble selon la revendication 12 ou 13, dans lequel la rondelle (60) est prévue avec une paroi circonférentielle (61) s'étendant autour du boîtier (11), dans lequel la paroi circonférentielle fusionne avec une paroi de confinement (62) orientée vers le tuyau (1) pour confiner la bague de préhension (30) dans la première feuillure (20), dans lequel la paroi circonférentielle (61) a un premier bord d'extrémité libre (69) et les rainures de guidage (65) se terminent dans le bord d'extrémité libre.

15. Ensemble selon les revendications 13 et 14, dans lequel, dans la direction de rotation, les rainures de guidage (65) se terminent dans le bord d'extrémité libre (69), à l'écart des surfaces pilotes (72), dans lequel la rondelle est fabriquée dans un matériau synthétique.

16. Procédé pour assembler un raccord de tuyau (10) pour le raccordement à un tuyau synthétique (1), dans lequel le raccord de tuyau (10) comprend une partie d'insertion (12) ayant une ouverture d'insertion (13) pour insérer le tuyau synthétique dans le raccord de tuyau suivant une direction d'insertion (A), dans lequel la partie d'insertion comprend un boîtier synthétique (11) qui est prévu avec une paroi d'insertion circonférentielle (15) dans laquelle s'adapte le tuyau (D1), dans lequel, via un épaulement de premier diamètre, la paroi d'insertion fusionne avec une première paroi de logement circonférentielle (18) ayant un plus grand diamètre intérieur (D2) que la paroi d'insertion (15), dans lequel la première paroi de logement borde une première feuillure (20), dans lequel la paroi d'insertion comprend une bague de préhension (30) qui est logée dans la première feuillure et qui est engagée autour du tuyau inséré, une bague de pincement (40) s'étendant au moins partiellement autour de la bague de préhension pour l'action de coin sur la bague de préhension, un joint d'étanchéité circonférentiel (50) à l'intérieur du boîtier (11) qui, espacé de la bague de préhension, est engagé autour et sur le tuyau avec une force de pression, et une rondelle (60) qui est engagée sur le boîtier et qui confine la bague de préhension dans la première feuillure, via la bague de pincement (40), dans lequel la rondelle peut être entraînée en rotation par rapport au boîtier, depuis une position d'attente prédéterminée jusque dans une position de démontage prédéterminée, dans lequel, dans la position d'attente, la bague de préhension est engagée, de manière fixe, autour et sur le tuyau inséré (1), et dans la position de démontage, la rondelle (60) est désengagée ou se désengage du boîtier (11), dans lequel la rondelle (60) est prévue avec une paroi circonférentielle (61) ayant un bord d'extrémité libre (69) qui s'étend autour du boîtier (11) et qui fusionne avec une paroi de confinement (62) orientée vers le tuyau (1) pour confiner la bague de préhension (30) dans la première feuillure (20), dans lequel la partie d'insertion (12) est prévue avec des cames de fixation (27) qui sont réparties autour du boîtier (11), et la rondelle (60) est prévue avec des rainures de guidage (65) dans la paroi circonférentielle (61), rainures (65) dans lesquelles s'étendent les cames de fixation (27), dans lequel les rainures de guidage (65) ont une voie de tension (67) avec un composant directionnel tangentiel suivant la direction de rotation et un plus petit composant directionnel axial parallèle à la direction d'insertion (A), dans lequel la rondelle (60) est prévue avec des surfaces pilotes (72) situées le long des rainures de guidage (65) et positionnées de manière oblique par rapport à la direction d'insertion (A) pour recevoir les cames de fixation (27), dans lequel les surfaces pilotes fusionnent avec des seuils (73) vers les rainures de guidage (65), dans lequel le procédé comprend la mise en place de la bague de préhension (30), de la bague de pincement (40) et du joint d'étanchéité (50) dans le boîtier (11) ou dans la rondelle (60), le déplacement du boîtier (11) et de la rondelle (60) l'un vers l'autre dans la direction d'insertion (A) avec les surfaces pilotes (72) qui sont alignées avec les cames de fixation (27) et via les surfaces pilotes qui guident les cames de fixation au-delà des seuils (73) dans les rainures de guidage (65), dans lequel la rondelle arrive dans la position d'attente, dans lequel les rainures de guidage (65) se terminent de préférence dans le bord d'extrémité libre (69), à l'écart des surfaces pilotes (72) .
